# EUROPEAN PATENT SPECIFICATION

(11) **EP 2 101 154 B1**
(45) Date of publication and mention of the grant of the patent: **22.06.2011**
(21) Application number: 08152577.6
(22) Date of filing: 11.03.2008
(51) Int. Cl.: G01C 21/36

(54) **Navigation system, computer program product, electronic control unit, and vehicle**
Navigationssystem, Computerprogrammprodukt, elektronische Kontrolleinheit und Fahrzeug
Système de navigation, produit de programme informatique, unité de calcul électronique et véhicule

(43) Date of publication of application: 16.09.2009
(73) Proprietor: Ford Global Technologies, LLC, Dearborn, MI 48126 (US)
(72) Inventor: Ewaldz, Magnus, S-4 16 56 Göteborg (SE); Fast, Peder, S-426 34 Kullavik (SE); Camsel, Reine, S-442 33 Kungälv (SE); Lagström, Lars, S-436 44 Askim (SE)
(74) Representative: VALEA AB

(56) References cited:
- EP-A- 1 441 202
- WO-A-2007/105500
- JP-A- 2000 275 050
- JP-A- 2002 031 539
- US-A1- 2002 198 633

## Description

### TECHNICAL FIELD

The present invention concerns a navigation system, a computer program product, an electronic control unit (ECU) comprising such a computer program product and a vehicle comprising such a navigation system, computer program product and/or ECU.

### BACKGROUND OF THE INVENTION

Navigation systems for vehicles typically use a Global Positioning System (GPS) to acquire position data and locate the user on a road in the system's map database. A typical GPS receiver calculates its position using the signals from three or more GPS satellites. Each GPS satellite has an atomic clock and continually transmits messages containing the current time at the start of the message. The signals from the satellites travel to the receiver at a known speed and the receiver uses the arrival time to compute the distance to each satellite, from which it determines the position of the receiver using geometry and trigonometry.

A user's GPS receiver usually comprises a display means for providing location and speed information to the user. Usually, a map is displayed on which a user's position is indicated. The displayed map is usually scrolled continually and the user's current position is usually centred in the bottom third, or in the middle of the displayed map. Many commercially available navigation systems also allow a user to scroll the displayed map, i.e. to move the map across a display means so that different parts of the map can be viewed.

The abstract of Japanese patent document no. JP 8190343 discloses a map display device that allows a user to scroll along a particular road on a displayed map in a direction corresponding to the direction in which a joystick is pressed. This document therefore describes the well known navigation system feature of "fast forward" or "rewind" scrolling a route that a user has chosen.

Some navigation systems allow a user to scroll a map in one of a plurality of predefined scroll directions, such as northwards, eastwards, southwards or westwards, for example by pressing a scroll button corresponding to the desired scroll direction. However, if a user wants to scroll in a direction other than one of the predefined scroll directions such as in a north-easterly direction, or if a user wants to scroll along a particular route on the map, the user has to scroll using a plurality of scroll buttons, which can be time consuming and complex.

Alternatively or additionally, some navigation systems allow a user to scroll a displayed map in any desired direction, for example by pressing a scroll button and then tapping and holding a particular part of the displayed map and dragging the map in a desired direction.

Scrolling a map using such conventional scrolling means may however require significant attention from the driver. As a safety feature, some navigation systems lock out certain features when the vehicle is in motion to avoid the driver being distracted when driving.

JP 2002 031539 concerns a navigation device capable of enhancing controllability during map scrolling. When scrolling is directed, a movable range setting portion acquires the picture data of a guided route to be currently displayed from a guided route picturing part, and originates a table of movable ranges according to the picture data acquired. The table of the movable ranges is a data table in the form of a matrix in a one-to-one correspondence with each position on a display screen, and an area proximate to the guided route is set as a movable range. A predetermined resisting force to the operation of an operating part is produced if, according to the table of the movable ranges originated by the movable range setting portion, scrolling is performed outside of the movable range, that is, in a direction not matching the guided route.

JP 2000 275050 discloses a way of more efficiently confirming a route by eliminating useless scroll operations. A route computation part calculates the route from the current location of a vehicle to a destination supplied through an input part based on data from a route search or the like. A scroll direction decision part decides the scroll direction of a map so as to successively position respective points present on the route inside a judgment frame set on the inner side of a range being displayed in the map displayed on a display part. A map plotting part scrolls the map displayed on the display part in the decided scroll direction for a distance equal to or less than the distance decided beforehand.

### SUMMARY OF THE INVENTION

An object of the present invention is to provide an improved navigation system.

This object is achieved by a navigation system as defined in claim 1.

The default map scrolling direction is arranged to be activated automatically in the direction in which said route extends if a user has chosen, or if the user chooses to scroll in a direction substantially corresponding to the direction in which said route extends

In other words, a user may scroll a map in any direction or in any predefined direction, however whenever a user scrolls the map in a direction that approaches/reaches/crosses the route along which he/she is travelling or going to travel, the map will automatically start to scroll in the direction in which the route extends if the user has chosen, or if the user chooses, to scroll in a direction substantially corresponding to the direction in which the route extends. How closely the "direction substantially corresponding to the direction in which the route extends" corresponds to the direction in which the route extends will depend on the number of scrolling direction choices available to a user. For example if a user has only four scrolling directions to choose from, namely northwards, eastwards, southwards or westwards and a route extends in a north-easterly direction at an angle of 10° from due East, the easterly direction will then be the direction substantially corresponding to the direction in which the route extends. The "direction substantially corresponding to the direction in which the route extends" may therefore be ±45° from one of the scrolling directions available to a user.

This invention is based on the finding that the most commonly desired map scrolling direction is the direction of the route along which the user is travelling or is going to travel. By making this direction the default map scrolling direction once a cursor means on a displayed map, approaches, reaches or crosses the route along which along which the user is travelling or is going to travel, minimum attention is required from the user when he/she is scrolling the map.

The expression "map" as used in this document is intended to mean any visual representation of an area which symbolically depicts elements in a particular space and of relationships between the elements of that space. It may be two- or three- dimensional and may represent any real or imaginary space.

According to an embodiment of the invention the navigation system comprises means for allowing a user to override the default map scrolling direction and thereby make map scrolling in any direction, or in any predefined direction possible.

According to another embodiment of the invention the navigation system comprises means for allowing a user to scroll along the route in a direction towards a chosen destination and/or towards the user's initial location, i.e. in a forwards direction towards the end of the route and/or in a backwards direction towards the start of the route, once the default map scrolling direction has been activated. The expression "direction in which the route extends" may therefore actually be considered to be two directions, namely the direction from the start point to a chosen destination (i.e. the end of the route, if the user has chosen a plurality of chosen destinations) and from the chosen destination (end of the route) to the start point unless a cursor means is positioned at the start point or at the chosen destination (end of the route).

It should be noted that a navigation system may be arranged to always scroll in a forwards direction towards the end of the route once the default map scrolling direction has been activated. This may for example be useful in cases where a route requires a user to travel both up and down a particular street, such as a dead end street to make an intermediate stop along the street, if/when a cursor means on the map approaches/reaches/crosses the route somewhere along the dead end street while a user is scrolling the map.

According to an embodiment of the invention the navigation system comprises means to present predefined or user-selected information while a user is scrolling the map. Such information may include an electronic range (ER) function which continuously presents the distance and estimated travel time to a cursor position on the scrolled map, or information concerning a road name or number, traffic congestion, alternative routes, restaurants, cash machines, fuel stations, hotels, speed traps, historic sites, rest areas or weather forecasts.

According to another embodiment of the invention the navigation system comprises means to continuously scroll the map at a predetermined scroll speed once the default map scrolling direction has been activated. Scrolling a map will therefore require even less attention from a user and minimal or no interaction with the navigation system from the user once the default map scrolling direction has been activated.

According to a further embodiment of the invention the cursor means is arranged to change its appearance, for example by changing the thickness and/or colour of at least one part thereof, when the cursor means is located on the route, or in the vicinity of the route in order to indicate to a user that the default map scrolling direction will be activated if the user chooses to scroll the map in a direction substantially coinciding with the direction in which the route extends.

The present invention further concerns a computer program product that comprises a computer program according to claim 8, and an electronic control unit (ECU) comprising such a computer program product.

The present invention also concerns a vehicle comprising a navigation system according to any of the embodiments of the invention, a computer program product and/or an ECU according to any of the embodiments of the invention.

The navigation system, computer program product and ECU according to any of the embodiments of the invention are intended for use particularly, but not exclusively in a vehicle. The vehicle may be any means of transportation including a passenger car, truck, bus, heavy goods vehicle, aircraft, sea-going vessel or spacecraft. The navigation system and computer program product according to any of the embodiments of the invention may however be incorporated into, or arranged to be in communication with any portable or non-portable device such as a telephone, computer, camera or television.

It should be noted that a single entity, such as a vehicle, need not necessarily comprise all of the claimed features of a navigation system according to the present invention, a vehicle may for example solely comprise the claimed display means and map scrolling means which are arranged to be in communication with the remaining claimed features of a navigation system according to the invention, whereby the remaining claimed features are located in some other location, such as in a building which transmits data to the vehicle, and optionally to a plurality of other users.

### BRIEF DESCRIPTION OF THE DRAWINGS

The present invention will hereinafter be further explained by means of non-limiting examples with reference to the appended figures where;
- Figure 1: schematically shows a vehicle according to an embodiment of the invention,
- Figure 2: schematically show part of a navigation system according to an embodiment of the invention while a user is travelling along a route, and
- Figure 3: schematically show part of a navigation system according to an embodiment of the invention while a user is scrolling a displayed map.

It should be noted that the drawings have not necessarily been drawn to scale and that the dimensions of certain features may have been exaggerated for the sake of clarity.

### DETAILED DESCRIPTION OF EMBODIMENTS

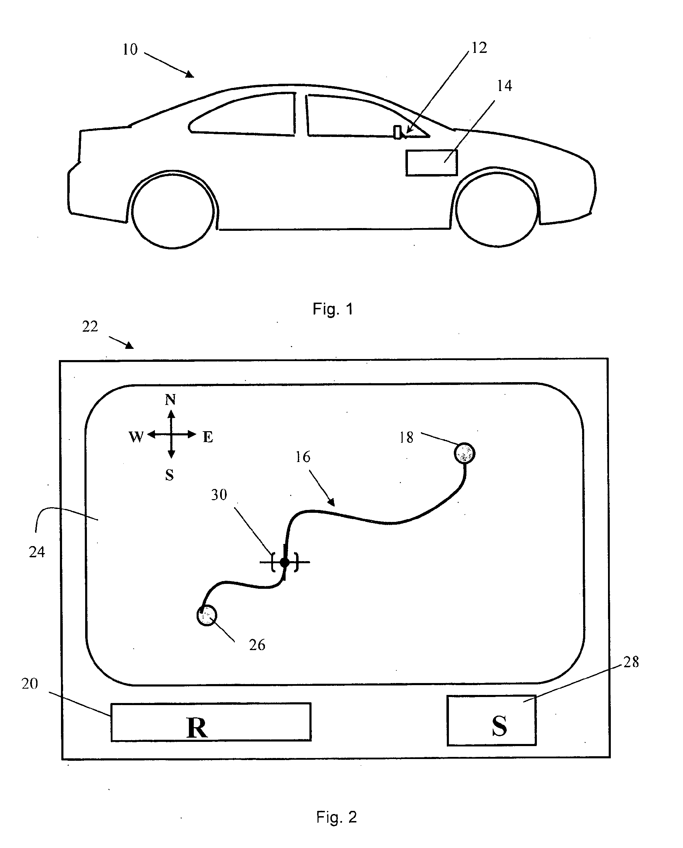

Figure 1 shows a vehicle 10 comprising a navigation system 12 including an ECU 14 comprising a computer program product according to an embodiment of the invention. The navigation system 12 may be mounted on, or permanently integrated into the dashboard of the vehicle 10.
Figure 2 shows a part of the navigation system 12 corresponding to that generally seen by a user of the vehicle 10. The navigation system 12 comprises means for providing a user with a route 16 to a chosen destination 18, such as a GPS-, map-matching, gyro- or speed pulse system. A user may for example input a chosen destination 18 using a keyboard, touch screen, remote control or voice commands or by any other means. Such destination input means 20 may be located on a unit comprising the display means 22 of the navigation system (as shown in figure 2) or on the steering wheel of the vehicle 14. The navigation system 12 comprises display means 22 for displaying a road map 24 showing at least part of the route 16 provided by the navigation system 12. The whole route 16 is shown in the embodiment illustrated in figure 2.

The navigation system 12, once provided with a chosen destination 18, searches its database(s) for the most suitable route 16 to connect from the user's initial location 26 (or the location chosen by the user as a starting point) to the chosen destination 18 by means of a simulated calculation and stores the searched route as a guide route. While the user is traveling, the navigation system 12 may be arranged to display a map 24 highlighting at least part of the route 16. When the vehicle 10 approaches an intersection, the navigation system 12 displays the traveling direction with an arrow for example thereby guiding the driver to the chosen destination 18.

The road map 24 exemplified in figure 2 shows only the initial location 26 of the user, the chosen destination 18, the route 16 to be taken to reach the chosen destination 18 and the compass points: North, East, South and West for the sake of clarity. A displayed road map 24 may however only display part of a route 16 and may also display other roads, fuel stations, buildings etc. Alternatively the displayed map 24 may be an aeronautical or nautical chart or a railroad network map and may comprise any of the information that is usually shown on such maps.

According to an embodiment of the invention the navigation system 12 comprises cursor means 30 that are arranged to indicate the current position of the user's vehicle 10 on the map 24.

The navigation system 12 comprises map scrolling means 28 to allow a user to scroll the map 24, whereby the scrolling means are arranged to have a default map scrolling direction. In figure 2 the scrolling means 28 are shown as a button on a unit comprising the display means 22 although scrolling means could be incorporated into the steering wheel of the car or be arranged to be activated by a voice command.

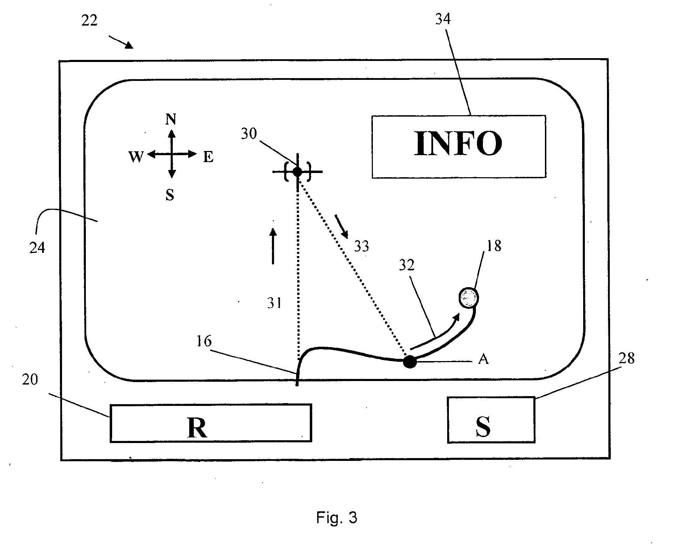

Figure 3 shows a map 24 while a user is scrolling. In the illustrated embodiment, a user has scrolled northwards of the route 16 on which he/she is travelling in the direction and amount indicated by arrow 31. If the user were then to scroll in a south-easterly direction indicated by the arrow 33, as soon as the cursor means 30 reaches the route 16, (point A marks the point at which the cursor means 30 intersects the route 16) the map 24 will start to scroll in the default map scrolling direction 32, i.e. in the direction in which the route 16 extends from point A to the chosen destination 18. In the illustrated embodiment part of the route 16 is visible on the displayed map 24 during the scrolling, the route 16 could however completely disappear from view while a user is scrolling the map 24.

Alternatively, the navigation system may be arranged to start to scroll the map 24 in the default map scrolling direction 32, i.e. in the direction in which the route 16 extends from point A to the chosen destination 18 when the cursor means 30 becomes located in the vicinity of the route 16. The cursor means 30 may for example be arranged to change its appearance when it is located in the vicinity of the route, for example by highlighting a particular direction corresponding substantially to the direction in which the route 16 extends. In the embodiment illustrated in figure 3, the East-West direction of the cursor means 30 could for example be highlighted (for example by increasing the thickness and/or changing the colour of the East-West axes of the cursor means 30) once a user has moved the cursor means 30 to a point in the vicinity of the route 16.

If the user then chooses to scroll in a direction corresponding substantially to the direction in which the route 16 extends (in the East or West direction in the illustrated case) the map will start to scroll in the default map scrolling direction either from point A towards the initial location 26 if the user chooses to scroll in a westerly direction or from point A towards the chosen destination 18 if the user chooses to scroll in a easterly direction when the cursor means 30 in the vicinity of the route 16.

If the user decides to scroll in a northwardly or southerly direction when the cursor means 30 is located on the route 16 or in the vicinity of the route 16, the default map scrolling direction will not be activated and the user will scroll away from the route 16.

It should be noted that the cursor means 30 need not necessarily be a visible icon on a display means 22 as shown in figure 3. The cursor means 30 may for example be a particular point on the displayed map such as the map centre point.

The navigation system 12 may be arranged to continuously scroll the displayed map 24 in the default map direction 32 from point A to the chosen destination 18 at a predetermined speed once the user has started scrolling the map 24 or it may require a user to continue to press the scrolling button 28 in order to continue to scroll the displayed map 24 in the default map direction 32.

Figure 3 also shows that the navigation system 12 may be arranged to present predefined or user-selected information 34 while a user is scrolling the displayed map 24. This information 34 may be arranged to pop up in a separate window on the display means 22. A navigation system 12 may be arranged to show a map being scrolled in a separate window so that a user can scroll and see his/her current location on the route 16 on which he/she is travelling or is going to travel. Alternatively, the navigation system 12 may be arranged to automatically switch back to a map 24 displaying his/her current location on the route 16 on which he/she is travelling once he/she has finished scrolling the map 24, or when he/she has to make a turn.

It should be noted that a map 24 may be scrolled even when a user is not travelling along a particular route 16. A map 24 may for example be scrolled while a user is sitting in his/her garage at any time after the user has been provided with a route 16 or has approved/selected a route 16 suggested by the navigation system 12.

A user may however override any default map scrolling direction 32 and thereby make map scrolling in any direction possible, for example by clicking a button or by any other means.

Further modifications of the invention within the scope of the claims would be apparent to a skilled person. For example, even though the expression "navigation system" has been used throughout this document, it should be understood that the invention is not only applicable to systems for allowing a user to steer a course through a medium but may also be used for surveying and in scientific applications.

## Claims

1. Navigation system (12), for a vehicle (10), comprising:
• means for providing a user with a route (16) to a chosen destination (18),
• display means (22) for displaying a map (24) showing at least part of said route (16), and
• map scrolling means (28) to allow a user to scroll said map (24), whereby said scrolling means are arranged to have a default map scrolling direction (32),
**characterized in that** said navigation system (12) is arranged to automatically start to scroll said map (24) in a default map scrolling direction (32) coinciding with a direction substantially corresponding to a
direction in which said route (16) extends a cursor means (30) on said map (24) approaches, reaches or crosses said route (16) while a user is scrolling said map (24).

2. Navigation system (12) according to claim 1, **characterized in that** said default map scrolling direction (32) is arranged to be activated automatically in the direction in which said route (16) extends if a user has chosen, or if the user chooses to scroll in a direction substantially corresponding to the direction in which said route (16) extends.

3. Navigation system (12) according to claim 1 or 2, **characterized in that** said navigation system (12) comprises means for allowing a user to scroll along said route (16) in a direction towards a chosen destination (18) and/or towards an initial location (26) once said default map scrolling direction (32) has been activated.

4. Navigation system (12) according to any of the preceding claims, **characterized in that** it comprises means for allowing a user to override the default map scrolling direction (32) and thereby make map scrolling in any direction possible.

5. Navigation system (12) according to any of the preceding claims, **characterized in that** it comprises means to present predefined or user-selected information (34) while a user is scrolling said map (24).

6. Navigation system (12) according to any of the preceding claims, **characterized in that** it comprises means to continuously scroll said map (24) once said default map scrolling direction (32) has been activated.

7. Navigation system (12) according to any of the preceding claims, **characterized in that** said cursor means (30) is arranged to change its appearance when the cursor means (30) is located on said route or in the vicinity of said route (16).

8. Computer program product, **characterized in that** ii comprises a computer program containing computer program code means stored on a computer-readable medium or a carrier wave and arranged to automatically scroll a displayed map (24) in a default map scrolling direction (32) coinciding with a direction substantially corresponding to a direction in which a route (16) to a chosen destination extends if a cursor means (30) or said displayed map (28) approaches, reaches or crosses said route (16) while a user is scrolling said displayed map (24).

9. Electronic control unit (ECU) (14), **characterized in that** it comprises a computer program product according to claim 8.

10. Vehicle (10), **characterized in that** it comprises a navigation system (12) according to any of claims 1-7, a computer program product according to claim 8 and/or an ECU (14) according to claim 9.

## Patentansprüche

1. Navigationssystem (12) für ein Fahrzeug (10), umfassend:
• Mittel zum Versorgen eines Nutzers mit einer Route (16) zu einem gewählten Ziel (18),
• Anzeigemittel (22) zum Anzeigen einer Karte (24), die zumindest einen Teil der Route (16) zeigt, und
• Kartenverschiebungsmittel (28), die einem Nutzer erlauben, die Karte (24) zu verschieben, wobei die Kartenverschiebungsmittel so eingerichtet sind, dass sie über eine voreingestellte Kartenverschiebungsrichtung (32) verfügen,
**dadurch gekennzeichnet, dass**
das Navigationssystem (12) so angelegt ist, dass es automatisch beginnt, eine angezeigte Karte (24) in eine voreingestellte Kartenverschiebungsrichtung (32) zu verschieben, die mit einer Richtung zusammenfällt, die im wesentlichen einer Richtung entspricht, in welche sich die Route (16) erstreckt, falls sich ein Positionsanzeigemittel (30) auf der Karte (24) der Route (16) nähert, diese erreicht oder kreuzt, während ein Nutzer die Karte (24) verschiebt.

2. Navigationssystem (12) nach Anspruch 1, **dadurch gekennzeichnet, dass** die voreingestellte Kartenverschiebungsrichtung (32) so eingerichtet ist, dass sie automatisch in die Richtung, in welche sich die Route (16) erstreckt, aktiviert werden kann, wenn der Nutzer gewählt hat, oder wenn der Nutzer entscheidet, in eine Richtung zu verschieben, die im wesentlichen der Richtung entspricht, in welche sich die Route (16) erstreckt.

3. Navigationssystem (12) nach Anspruch 1 oder 2, **dadurch gekennzeichnet, dass** das Navigationssystem (12) Mittel umfasst, die einem Nutzer erlauben, entlang der Route (16) in Richtung eines gewählten Ziels (18) und / oder in Richtung einer Ausgangsposition (26) zu scrollen, sobald die voreingestellte Kartenverschiebungsrichtung (32) aktiviert wurde.

4. Navigationssystem (12) nach einem der vorhergehenden Ansprüche, **dadurch gekennzeichnet, dass** es Mittel umfasst, die einem Nutzer erlauben, die voreingestellte Kartenverschiebungsrichtung (32) vorübergehend außer Kraft zu setzen und somit das Verschieben der Karte in jede Richtung zu ermöglichen.

5. Navigationssystem (12) nach einem der vorhergehenden Ansprüche, **dadurch gekennzeichnet, dass** es Mittel umfasst, um vorbestimmte oder vom Nutzer ausgewählte Informationen (34) aufzuzeigen, während ein Nutzer die Karte (24) verschiebt.

6. Navigationssystem (12) nach einem der vorhergehenden Ansprüche, **dadurch gekennzeichnet, dass** es Mittel umfasst, um die Karte (24) fortwährend zu verschieben, sobald die voreingestellte Kartenverschiebungsrichtung (32) aktiviert wurde.

7. Navigationssystem (12) nach einem der vorhergehenden Ansprüche, **dadurch gekennzeichnet, dass** das Positionsanzeigemittel (30) so angelegt ist, seine Erscheinung zu ändern, wenn sich das Positionsanzeigemittel (30) auf der Route oder in der Nähe der Route (16) befindet.

8. Computerprogrammprodukt, **dadurch gekennzeichnet, dass** es ein Computerprogramm umfasst, das Computerprogramm-Codemittel enthält, die in einem für Computer lesbaren Medium oder einer Trägerwelle gespeichert und so angelegt sind, dass sie eine angezeigte Karte (24) automatisch in eine voreingestellte Kartenverschiebungsrichtung (32) verschieben, die mit einer Richtung zusammenfällt, die im wesentlichen einer Richtung entspricht, in welche sich eine Route (16) zu einem gewählten Ziel erstreckt, wenn sich ein Positionsanzeigemittel (30) oder die angezeigte Karte (24) der Route (16) nähert, diese erreicht oder kreuzt, während ein Nutzer die angezeigte Karte (24) verschiebt.

9. Elektronische Steuereinheit (ECU) (14), **dadurch gekennzeichnet, dass** sie ein Computerprogrammprodukt nach Anspruch 8 umfasst.

10. Fahrzeug, **dadurch gekennzeichnet, dass** es ein Navigationssystem (12) nach einem der Ansprüche 1 bis 7, ein Computerprogrammprodukt nach Anspruch 8 und / oder eine elektronische Steuereinheit (ECU) nach Anspruch 9 umfasst.

## Revendications

1. Système de navigation (12) pour un véhicule (10), comprenant :
• des moyens pour fournir à un utilisateur un itinéraire (16) vers une destination choisie (18),
• des moyens d'affichage (22) pour afficher une carte (24) montrant une partie au moins dudit itinéraire (16), et
• des moyens de défilement (28) de la carte pour permettre à un utilisateur de faire défiler ladite carte (24), lesdits moyens de défilement étant prévus pour avoir une direction par défaut (32) de défilement de la carte,
***caractérisé en ce que*** ledit système de navigation (12) est prévu pour commencer automatiquement à faire défiler ladite carte (24) dans une direction par défaut (32) de défilement de la carte coïncidant avec une direction correspondant essentiellement à une direction dans laquelle s'étend ledit itinéraire (16) si un moyen de curseur (30) sur ladite carte (24) s'approche, atteint ou traverse ledit itinéraire (16) pendant qu'un utilisateur fait défiler ladite carte (24).

2. Système de navigation (12) selon la revendication 1, ***caractérisé en ce que*** ladite direction par défaut (32) de défilement de la carte est prévue pour être activée automatiquement dans la direction dans laquelle ledit itinéraire (16) s'étend si un utilisateur a choisi, ou si l'utilisateur choisit, de faire défiler dans une direction correspondant essentiellement à la direction dans laquelle s'étend ledit itinéraire (16).

3. Système de navigation (12) selon la revendication 1 ou 2, ***caractérisé en ce que*** ledit système de navigation (12) comprend des moyens pour permettre à un utilisateur le défilement le long dudit itinéraire (16) dans une direction allant vers une destination choisie (18) et/ou vers un emplacement initial (26) une fois que ladite direction par défaut (32) de défilement de la carte a été activée.

4. Système de navigation (12) selon l'une quelconque des revendications précédentes, ***caractérisé en ce qu'***il comprend des moyens pour permettre à un utilisateur d'annuler la direction par défaut (32) de défilement de la carte et ainsi de faire défiler la carte dans toute direction possible.

5. Système de navigation (12) selon l'une quelconque des revendications précédentes, ***caractérisé en ce qu'***il comprend des moyens pour présenter des informations (34) prédéfinies ou choisies par l'utilisateur pendant qu'un utilisateur fait défiler ladite carte (24).

6. Système de navigation (12) selon l'une quelconque des revendications précédentes, ***caractérisé en ce qu'***il comprend des moyens pour faire défiler en continu ladite carte (24) une fois que ladite direction par défaut (32) de défilement de la carte a été activée.

7. Système de navigation (12) selon l'une quelconque des revendications précédentes,
***caractérisé en ce que*** ledit moyen de curseur (30) est prévu pour modifier son apparence lorsque le moyen de curseur (30) est situé sur ledit itinéraire ou au voisinage dudit itinéraire (16).

8. Produit-programme informatique, ***caractérisé en ce qu*'**il comprend un programme informatique contenant des moyens de code de programme informatique stockés sur un support lisible par un ordinateur ou une onde porteuse, et prévu pour dérouler automatiquement une carte affichée (24) dans une direction par défaut (32) de défilement de la carte coïncidant à une direction correspondant sensiblement à une direction dans laquelle s'étend un itinéraire (16) vers une destination choisie si un moyen de curseur (30) sur ladite carte (24) s'approche, atteint ou traverse ledit itinéraire (16) pendant qu'un utilisateur fait défiler ladite carte affichée (24).

9. Unité de commande électronique (ECU) (14), ***caractérisée en ce qu'***elle comprend un produit-programme informatique selon la revendication 8.

10. Véhicule (10), ***caractérisé en ce qu'***il comprend un système de navigation (12) selon l'une quelconque des revendications 1 à 7, un produit-programme informatique selon la revendication 8 et/ou une ECU (14) selon la revendication 9.
